# EUROPEAN PATENT APPLICATION

(11) **EP 1 587 251 A2**
(43) Date of publication of application: **19.10.2005**
(21) Application number: 04016019.4
(22) Date of filing: 07.07.2004
(51) Int. Cl.: H04L 12/28

(54) **Home network system with multi-network manager and method for controlling the same**

(30) Priority: 14.04.2004 KR 2004025816
(71) Applicant: LG ELECTRONICS INC., Seoul 150-010 (KR)
(72) Inventor: Chung, Jong Hoon, Kunpo-si 435-751 Kyungki-do (KR); Lee, Sang Kyun, Kwangmyung-si 423-060 Kyungki-do (KR)
(74) Representative: TER MEER - STEINMEISTER & PARTNER GbR

(57) **Abstract**

A home network system and a method for controlling the same. The home network system includes one or more network managers(100) or one or more master units(300) to perform an operation control function and a state monitoring function of home appliances connected to the same network(N). In the case where the network managers or the master units each generate an operation control signal to perform an operation control function or a state monitoring function, and are connected to a new network or further connected to a typical network, the home network system automatically establishes network information, and performs a database (DB) synchronization function associated with changed network information, such that a variety of network configurations can be configured, resulting in increased control convenience.

## Description

### BACKGROUND OF THE INVENTION

### Field of the Invention

The present invention relates to a home network system for controlling interactions of home appliances interconnected over a network and a method for controlling the same, and more particularly to a home network system with a multi-network manager, which can perform an operation control function and a state monitoring function of a plurality of home appliances, and can include a plurality of network managers connected to the same network, each of the network managers can perform an operation control function and a state monitoring function of a plurality of home appliances simultaneously with managing network setup information, resulting in one or more network groups, and a method for controlling the same.

### Description of the Related Art

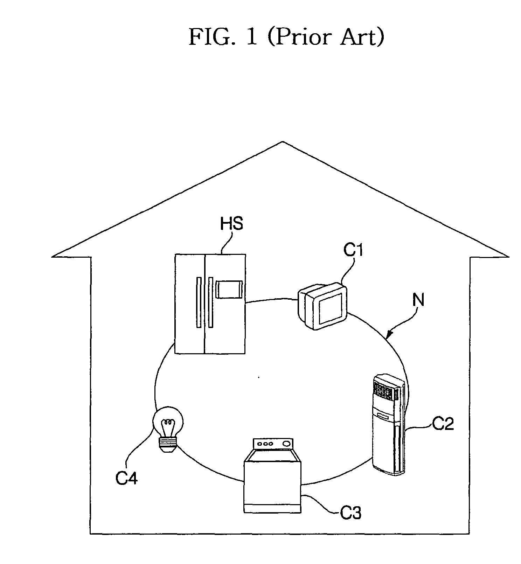

Fig. 1 is a conceptual diagram illustrating a conventional home network system.

Referring to Fig. 1, a network N has been implemented in a building, and has widely used a variety of lines, for example, power lines and LAN (Local Area Network) lines, etc.

One or more home appliances C1~C4, and a home server HS for centrally controlling the home appliances C1~C4 are interconnected over the network to establish data communication between the home appliances C1~C4 and the home server HS, such that the home server HS can control operations of the home appliances C1~C4, and can monitor their states.

For example, the home appliances C1~C4 may be determined to be a washing machine, a microwave oven, and a TV, etc. , and are indicative of a home appliance capable of performing a corresponding operation upon receiving a control signal from the home server HS.

The home server HS acts as a server for controlling the flow of signals communicating with the network N, can centrally control operations of the home appliances C1~C4, and can also monitor states of the home appliances C1~C4. It should be noted that the home server HS is substantially equal to a network manager.

As shown in Fig. 1, an Internet refrigerator operated to perform predetermined signal processing operations 24 hours a day is adapted as a server for illustrative purposes.

In this case, the home server HS assigns different logical addresses to individual home appliances C1~C4, such that it can identify different home appliances connected to the network N. If it is detected that home appliances (not shown) are initially or further connected to the network N, the home server HS assigns unique logical addresses to the home appliances.

A user enters a control command in a home server HS to control operations of the air-conditioner C2. Upon receiving the unique logical addresses, the home server HS transmits a control signal to the air-conditioner acting as a control object.

It is well known to those skilled in the art that the home server HS alone is generally connected to the same network. Although a second home server with a specific hardware unit for performing a network management function is further connected to the home network system in which a first home server has already been operated, the second home server can serve only as a slave for the first home server.

In order to enable the second home server to act as an active server along with the first home server, the second home server must generate a control signal on the basis of the same network setup information.

In conclusion, the aforementioned conventional home network system is unable to interact with a database (DB) such that the second home server is also unable to act as another server. In this way, the conventional home network system must use only one home server, resulting in reduced efficiency.

### SUMMARY OF THE INVENTION

Therefore, the present invention has been made in view of the above problems, and it is an object of the invention to provide a home network system and a method for operating the same, which can actively perform an operation control function and a state monitoring function of one or more home appliances connected to the network, and can control each of network managers to serve as a home server when a plurality of network managers for managing signal transmission/reception functions over the network are connected to the same network.

It is another object of the invention to provide a home network system and a method for controlling the same, which can interact with a database (DB) using individual network managers such that it can perform an active control function on the basis of the same network setup information, resulting in increased control efficiency and reliability of the home network system.

It is another object of the invention to provide a home network system and a method for controlling the same, which can classify a plurality of home appliances connected to the same network into predetermined network groups using individual network managers such that the network groups are differently managed by individual network managers, resulting in reduced processing load of individual network managers each acting as a home server.

In accordance with one aspect of the present invention, these objects are accomplished by providing a home network system with a multi-network manager, comprising: one or more home appliances controlled by a control signal communicating with a network configured in a building; and one or more network managers for generating a control signal to perform an operation control function or a state monitoring function of the home appliances, automatically establishing network information when they are connected to a new network or is further connected to a typical network, and performing a database (DB) synchronization function associated with changed network information.

In accordance with another aspect of the present invention, there is provided a method for operating a home network system including a multi-network manager, comprising the steps of: a) generating, by a network manager or a master unit being newly- or further connected to a network configured in a building, a network address, and assigning the network address to a corresponding target; b) determining whether a network manager pre-connected to the network exists in the network; and c) acquiring, by the network manager or the master unit, network setup information from the pre-connected network manager or individual home appliances connected to the network, and updating/storing the acquired network setup information in a database (DB).

The home appliance includes a network modem for performing data communication over the network, and a microprocessor for performing a corresponding operation according to a received control signal.

It should be noted that a variety of home appliances can be applied to the present invention even though they are not shown in the drawings. The network may be determined to be either one of a wired LAN, a wireless LAN, and power line based network, etc.

The network manager acts as a home server which can detect the flow of signals communicating with the network, and at the same time can monitor state information of one or more home appliances connected to the network.

The network manager detects a message generated from the home appliance, registers the home appliance newly or further connected to the network in the network, acquires network setup information from a corresponding home appliance, and stores the acquired network setup information in the DB, such that it can manage state information of the network.

The home appliance is classified into an actively-controlled master unit, and a slave unit for performing a corresponding operation according to a control signal generated from the network manager or the master unit. If a database (DB) and a processor for processing network load are contained in a predetermined master unit, and a management software module for the home server is configured, the master unit can act as a network manager.

The home network system including a multi-network manager is indicative of a system in which one or more network managers are connected to the same network. DBs of individual network managers are interoperable with each other, such that processor load to be processed by a single network manager is reduced, and control efficiency is increased.

One or more master units are connected to the home network system to manage the network, such that the home network system can act as an active controller.

### BRIEF DESCRIPTION OF THE DRAWINGS

The above objects, and other features and advantages of the present invention will become more apparent after reading the following detailed description when taken in conjunction with the drawings, in which:
Fig. 1 is a block diagram illustrating a conventional home network system;
Fig. 2 is a detailed block diagram illustrating a home network system in accordance with the present invention;
Fig. 3 is a block diagram illustrating a home network system in accordance with a preferred embodiment of the present invention;
Fig. 4 is a block diagram illustrating a home network system in accordance with another preferred embodiment of the present invention;
Figs. 5a, 5b and 5c are flow charts illustrating operation methods of the home network system in accordance with the present invention.

### DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

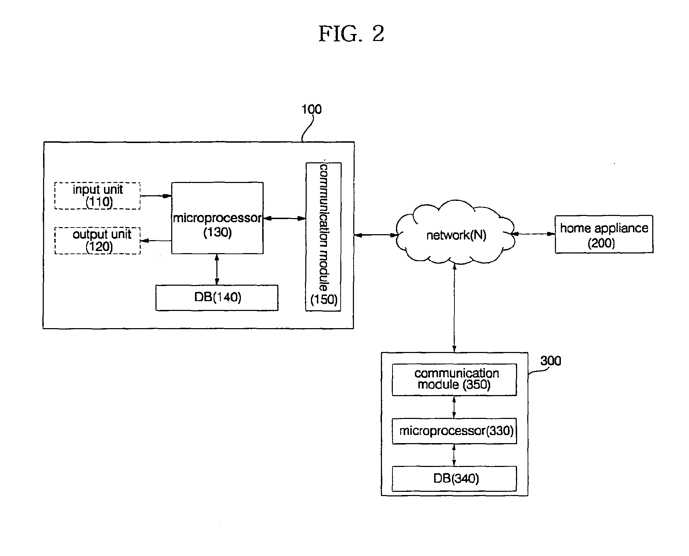

Fig. 2 is a detailed block diagram illustrating a home network system in accordance with the present invention.

One or more slaves, a master, and a network manager 100 are connected to a network N configured to implement a home networking function.

The network manager 100 is connected to the network N, and acts as a home server for controlling/managing signal transmission/reception functions between a plurality of home appliances 200 and 300.

It should be noted that the present invention adapts an Internet refrigerator as the network manager 100 for illustrative purposes. The Internet refrigerator stores foodstuffs at a cool temperature, includes a variety of computing hardware units, for example, a network modem, a processor, and a memory, etc., and also includes a management software program available for the home server.

In more detail, the network manager 100 stores/manages various operation mode information and detailed function information of home appliances 200 and 300. For example, the operation mode information of the home appliances may be an operation standby mode, an operation progressing mode, and an operation completion mode.

The network manager 100 assigns network addresses for identifying clients to individual home appliances 200 and 300 newly or further connected to the network N, and manages network setup information of the home appliances 200 and 300.

Provided that a plurality of home appliances connected to the same network N are classified into some groups and are differently controlled according to the groups, the network manager 100 generates group codes, and assigns the group codes to individual groups, such that it can carry out exclusive communication with neighbor groups without generating control errors associated with the neighbor groups.

The home appliances 200 and 300 each include a slave unit 200 for passively controlling its operation according to either a control signal received over the network N or its own reception control command, and one or more master units 300 for performing an operation control function and a state monitoring function of the home appliances connected to the network N upon receiving network setup information from the home appliances connected to the network.

The master unit 300 performs data communication in the same manner as in the network manager 100 such that it can provide a user with a necessary service. The master unit 300 establishes data communication with the home appliance 200, such that it can control operations of the home appliance 200 and can also monitor a network connection state of the home appliance 200. The master unit 300 can be implemented with a notebook computer, a PC (Personal Computer), or a PDA (Personal Digital Assistant), etc.

The slave unit 200 is passively controlled by either the network manager 200 or the master unit 300 in the same manner as in an electric lamp, an electronic curtain, and a washing machine, etc.

As shown in Fig. 2, the network manager 100 includes a microprocessor 130, a database (DB) 140 for storing device information and network setup information of the home appliances 200 and 300, and a communication module 150 for establishing data communication with the home appliances 200 and 300. The microprocessor 130 generates/manages home codes, assigns/manages network addresses for identifying home appliances 200 and 300, and performs an operation control function and a state monitoring function of the home appliances connected to the network.

In this case, the network N is indicative of either one of a LAN (Local Area Network) represented by an Ethernet, a wireless communication network (also called a wireless LAN) for adapting a high frequency of 2.4GHz, and a power line communication network for loading data on high frequency signals from several hundreds of kilohertz (kHz) to several tens of megahertz (MHz) over a low-voltage power line of 100V~220V to communicate with other devices. The communication module 150 is differently selected according to category information of the network.

The network manager 100 determines home codes or group codes when an initial network is newly established, assigns appropriate network addresses to individual home appliances 200 and 300 connected to the network N, acquires the home appliance information and network information, stores the acquired home appliance and network information, and configures a new network.

The network manager 100 further includes an input unit 110 for receiving control commands of the home appliances 200 and 300 from a user, and an output unit 120 for generating network state information and home appliance control result information according to a control signal of the microprocessor 130. The input unit 110 and the output unit 120 are integrated into a touch panel, such that they can be implemented with the touch panel.

Therefore, the user enters control commands for controlling operations of the home appliances 200 and 300 connected to the network N using the input unit 110. If operation control results of a client device controlled by the control commands are displayed on the output unit 120, the state monitoring function of the home appliances connected to the network can also be carried out.

Referring to Fig. 2, the home network system includes one or more master units 300 for receiving network setup information from home appliances connected to the network, and performing an operation control function and a state monitoring function of the home appliances.

The master unit 300 is considered to be the same as the network manager 100 when it acts as a device for providing necessary services by aggressively communicating with other devices. However, it is impossible for the master unit 300 to generate/manage home codes, to assign network addresses for identifying the home appliances, and to manage the assigned network addresses, differently from the network manager 100.

The master unit 300 includes a microprocessor 330, a DB 340 for storing network setup information received from either the home appliance or the network manager, and a communication module 350 for establishing data communication with the home appliance and the network manager. The microprocessor 330 requests network setup information of the home appliances from the home appliances 200 or the network manager 100 connected to the network N, and generates control commands to perform an operation control function and a state monitoring function of the home appliances.

The master unit 300 includes an input unit (not shown) for receiving a control signal for controlling operations of the home appliance 300 from a user, and an output unit (not shown) for displaying network state information and home-appliance control result information according to a control signal of the microprocessor 330.

The master unit 300 is connected to a pre-built network group in the same manner as in the network manager 100, controls operations of the slave unit 200, is further or initially connected to home appliances, and monitors a network connection release state.

If a plurality of network managers 100 and a plurality of master units 300 are contained in a house, the network managers 100 and the master managers 300 are interoperable with their DBs 140 and 340, and control operations of the home appliances upon receiving the same network setup information associated with the slave unit 200, the master units 300, and the network managers 100 connected to the network.

In more detail, the user can perform an operation control function and a state monitoring function of the home appliances 200 and 300 using a predetermined network manager 100 or master unit 300 contained in the network N. Operation control results or state variation results of the home appliances are updated and stored in DBs 140 of all the network managers 100 contained in the network and the DB 340 of the master unit 300 of the same network.

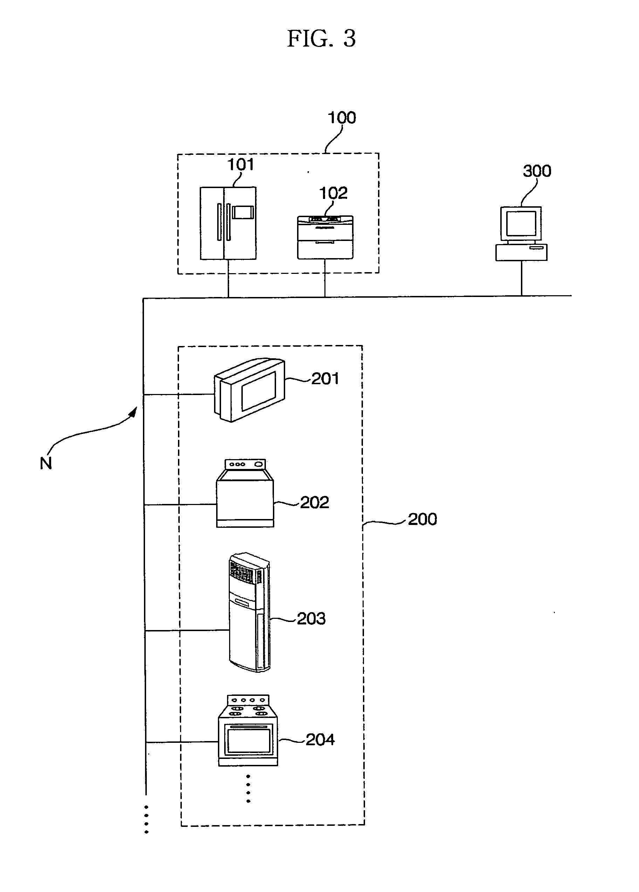

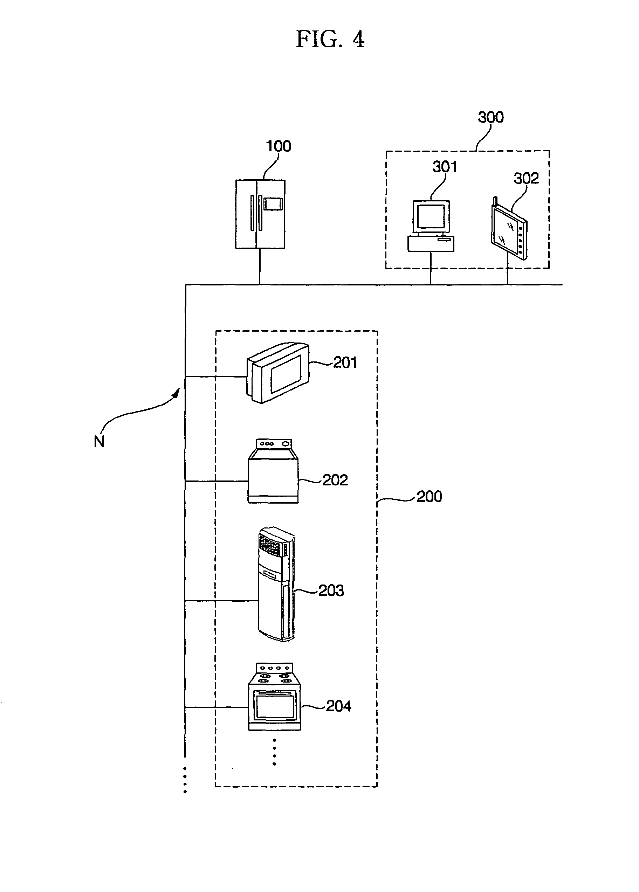

Fig. 3 is a block diagram illustrating a home network system in accordance with a preferred embodiment of the present invention. Fig. 4 is a block diagram illustrating a home network system in accordance with another preferred embodiment of the present invention.

The home network system according to the first preferred embodiment of the present invention discloses a plurality of network managers 100 contained in the same network.

In this case, the network group is indicative of a network system to which the same group code is assigned. Provided that the network group is configured in the form of house units, the home appliances contained in the house are controlled by the same home code. In this way, the network group can be differently established while being classified according to individual locations and categories, and individual network groups have different group codes.

Provided that the second network manager 102 is further connected to the pre-built network group, a newly-connected network manager receives network setup information of home appliances contained in a current network group from the first network manager 101 so as to guarantee a communication channel, controls the first network manager to interact with a predetermined DB, such that the same network setup information can be stored in the DB.

In this case, the first network manager 101 and the second network manage 102 are contained in the network group. If either one of the network managers for detecting a network state variation changes a current DB to another DB, and stores data in the changed DB, the remaining network manager having detected the DB change performs DB synchronization such that the same network setup information can be stored in the remaining network managers.

Therefore, one or more network managers 101 and 102 connected to the network group have the same network setup information, the user can control the home appliance 200 and the master unit 300 using the same control method in association with all the network managers, resulting in greater convenience for the user.

In the case where the second network manager 102 is further added to the network group disconnected from the pre-connected network manager 101, the second network manager directly receives network setup information from the home appliance 200 and the master unit 300 which are connected to the network N in such a way that it configures a database (DB). Therefore, the home appliances can be controlled by the second network manager 102 indicative of an additional device, without changing setup information associated with a previous network group to other information.

If the network manager is newly connected to configure a new network group or the second network manager is further connected to the pre-built network group, the network manager assigns a group code or network address to its connected home appliances, and detects a variation in connection state of the home appliances, such that it updates and stores network setup information.

The second preferred embodiment of the present invention discloses a specific case where a plurality of master units 300 are contained in the same network (i.e., the same network group), as shown in Fig. 4. In the case of the second preferred embodiment, the network manager 100 assigns a network address (also called a logical code) and a group code to the home appliance 200 and the master unit 301 that are connected to the network N, such that the network group generation process is completed and the master unit 302 is then further connected to the network group.

The master unit 302 further added to the network group communicates with either the pre-connected network manager 100 or the conventional master unit 301, such that it can receive setup information associated with the network group.

The master unit 302 further connected to the network group controls its own DB to interact with a database (DB) of the master unit 301, such that the master units 301 and 302 can be actively controlled on the basis of the same network setup information.

In more detail, the master unit 302 further connected to the network having no network manager 300 receives network setup information from individual home appliances 200 connected to the network N or the first master unit 301 pre-connected to the network N, and controls the DB to receive network setup information from the home appliance 200 and the master unit 300 in such a way that the DB can be configured.

Therefore, the user can perform an operation control function and a state monitoring function of the home appliance 200 using one or more master units 301 and 302 connected to the network group.

Particularly, if there is no network manager in the network group, the user can control operations of home appliances connected to the network N using the master units 301 and 302, resulting in greater control convenience.

However, the master units 301 and 302 cannot perform a network management function. If a home appliance is newly or further connected to the network or is disconnected from the network, the master units 301 and 302 are designed only to detect/display the above situations, cannot assign a network address to the newly-connected or further-connected home appliance, and also cannot delete network setup information of a home appliance disconnected from the network.

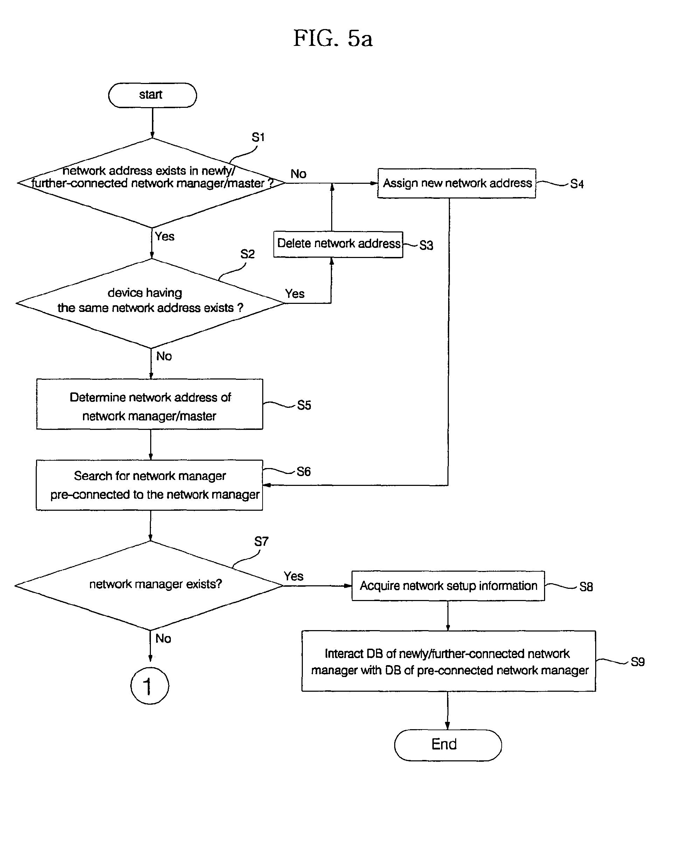

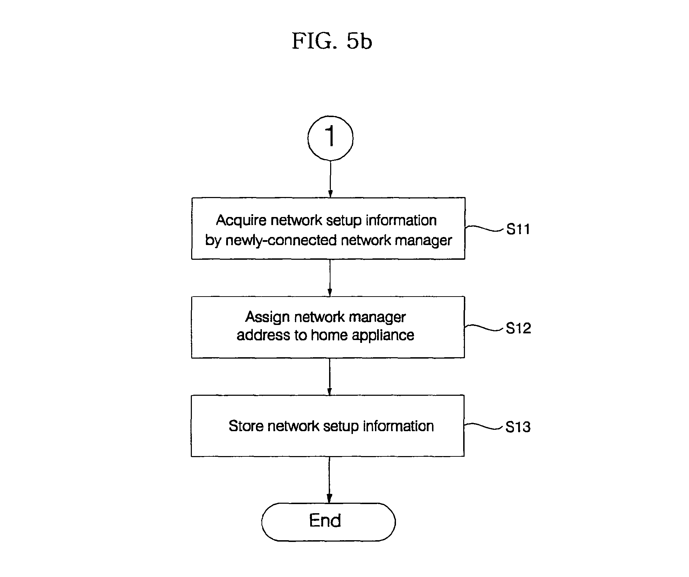

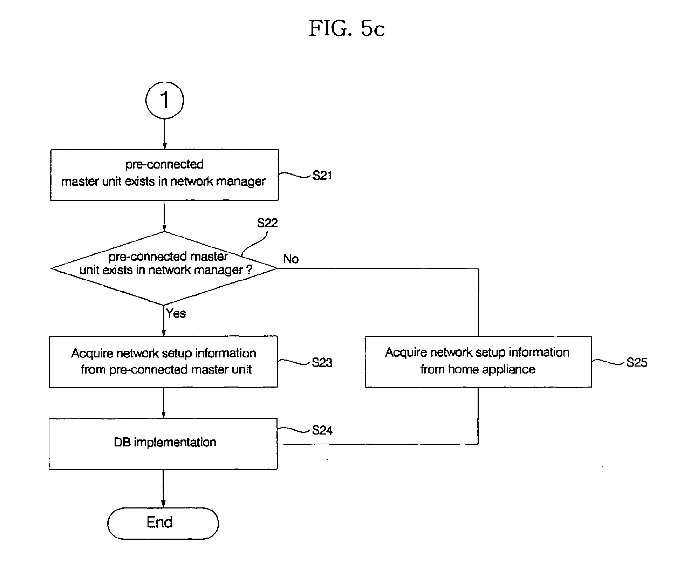

Operations of the aforementioned home network system with the multi-network manager will hereinafter be described with reference to Figs. 5a, 5b and 5c. Figs. 5a, 5b and 5c are flow charts illustrating operation methods of the home network system in accordance with the present invention.

Referring to Fig. 5a, in accordance with operation methods of the home network system, a network address is generated and assigned to the newly- or further-connected network manager or master unit.

If a pre-assigned network address exists in the newly- or further-connected network manager or master unit at step S1, the home network system determines whether another home appliance having the same address as the pre-assigned network address exists in the network at step S2.

If it is determined that the home appliance having the same address as the pre-assigned network address exists in the network at step S2, the home network system deletes a network address of the newly- or further-connected network manager or master unit at step S3, and assigns a new network address to a corresponding unit having no network address, such that a unique network address can be assigned to the corresponding unit at step S4.

On the contrary, if is determined that a home appliance having the same address as the pre-assigned network address does not exist in the network at step S2, the network address assigned to the network manager or the master unit is determined to be a network address of the network manager or the master unit at step S5.

The home network system determines whether a network manager pre-connected to the network exists in the network at step S6.

The newly- or further-connected network manager or the master unit acquire network setup information according to the determination result of the above step S6, and updates/stores the network setup information in the DB.

If it is determined that the network manager pre-connected to the network exists in the network at step S7, the newly- or further-connected network manager acquires network setup information from the pre-connected network manager, and stores the acquired network setup information at step S8. The newly- or further-connected network manager controls its own DB to interact with a DB of the network manager pre-connected to the network to assign the same network setup information to the DBs at step S9.

On the contrary, if it is determined that there is no network manager pre-connected to the network at step S7, operations of the newly- or further-connected network manager are different from those of the master unit as shown in Figs. 5b and 5c.

Referring to Fig. 5b, if it is determined that there is no network manager pre-connected to the network at step S7, the newly- or further-connected network manager directly acquires network setup information from the home appliance connected to the network at step S11.

In the case of generating a new network group, a network address is not assigned to the home appliance connected to the network yet, such that the network manager assigns a network address to the home appliance having no network address at step S12.

After assigning a network address to the home appliance connected to the network, the newly- or further-connected network manager updates and stores network setup information in the DB at step S13.

Referring to Fig. 5c, if there is no network manager pre-connected to the network, the newly- or further-connected master unit searches for a master unit pre-connected to the network at step S21.

If it is determined that the pre-connected master unit exists in the network at step S22, the newly- or further-connected master unit acquires network setup information from the pre-connected master unit at step S23, and configures a DB at step S24.

Otherwise, if it is determined that the pre-connected master unit does not exist in the network at step S22, the newly- or further-connected master unit acquires network setup information from the home appliance connected to the network at step S25, and configures a DB at step S24.

As apparent from the above description, a home network system with a multi-network manager according to the present invention includes a plurality of network managers capable of performing an operation control function and a state monitoring function of home appliances connected to the network, and controls DBs of individual network managers to be synchronized with each other, resulting in increased control efficiency.

The home network system can configure one or more network groups, such that data process load of individual network managers is reduced, resulting in reduction of a reduced control delay time and the number of errors.

Furthermore, in the case where one or more master units are further connected to the network temporarily disconnected from the network manager, the home network system can control the home appliances using the master unit, resulting in greater convenience of a user.

In more detail, the home network system can control operations of home appliances using at least one network manager or at least one master unit, can reflect changed network manager setup information of the controlled home appliances in the network manager's DB or the master unit's DB, resulting in an increased range of controllable devices.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A home network system with a multi-network manager, comprising:
one or more home appliances(200) controlled by a control signal communicating with a network(N) configured in a building; and
one or more network managers(100) for generating a control signal to perform an operation control function or a state monitoring function of the home appliances, automatically establishing network information when they are connected to a new network or is further connected to a typical network, and performing a database (DB) synchronization function associated with changed network information.

2. The home network system according to claim 1, wherein the network manager(100) is a home server which can perform an operation control function and a state monitoring function of home appliances(200) connected to the network, and at the same time can manage network connection operations of the home appliances.

3. The home network system according to claim 1, wherein the network manager(100) includes:
a microprocessor(130) for generating/managing home codes, assigning/managing network addresses for identifying home appliances, and performing an operation control function and a state monitoring function of the home appliances connected to the network; and
a database (DB)(140) for storing device information and network setup information of the home appliances.

4. The home network system according to claim 3, wherein the network manager(100) further includes:
a communication module(150) for establishing data communication with the home appliances.

5. The home network system according to claim 4, wherein the network manager(100) further includes:
an input unit (110) for receiving control commands of the home appliances from a user; and
an output unit(120) for generating network state information and home appliance control result information according to a control signal of the microprocessor.

6. The home network system according to claim 1, wherein the home appliances(200) each include:
a slave unit for passively controlling its operation according to either a control signal received over the network or its own reception control command; and
one or more master units(300) for performing an operation control function and a state monitoring function of the home appliances connected to the network upon receiving network setup information from the home appliances connected to the network.

7. The home network system according to claim 6, wherein the master unit(300) includes:
a microprocessor (330) for requesting network setup information of the home appliances from the home appliances or the network manager connected to the network, and generates control commands to perform an operation control function and a state monitoring function of the home appliances; and
a DB(340) for storing network setup information received from either the home appliance or the network manager.

8. The home network system according to claim 7, wherein the master unit(300) further includes:
a communication module(350) for establishing data communication with the home appliances and the network manager.

9. The home network system according to claim 8, wherein the master unit(300) further includes:
an input unit for receiving a control signal for controlling operations of the home appliances from a user; and
an output unit for displaying network state information and home-appliance control result information according to a control signal of the microprocessor.

10. A method for operating a home network system including a multi-network manager, comprising the steps of:
a) generating, by a network manager or a master unit being newly- or further connected to a network configured in a building, a network address, and assigning the network address to a corresponding target;
b) determining whether a network manager pre-connected to the network exists in the network; and
c) acquiring, by the network manager or the master unit, network setup information from the pre-connected network manager or individual home appliances connected to the network, and updating/storing the acquired network setup information in a database (DB).

11. The method according to claim 10, wherein the step a) includes the steps of:
a1) if there is a pre-assigned network address in the newly- or further-connected network manager or the master unit, determining whether another home appliance having the same network address as the pre-assigned network address exists in the network; and
a2) if it is determined that another home appliance having the same network address as the pre-assigned network address exists in the network, re-assigning a network address to the network manager or the master unit.

12. The method according to claim 10, wherein the step c) includes the steps of:
c1) if it is determined that the network manager pre-connected to the network exists in the network, acquiring, by the newly- or further-connected network manager or master unit, network setup information from the pre-connected network manager, and storing the acquired network setup information; and
c2) controlling the newly- or further-connected network manager or master unit to control its own DB to interact with a DB of the pre-connected network manager such that the same network setup information is assigned to the DBs.

13. The method according to claim 10, wherein the step c) further includes the steps of:
c3) if it is determined that there is no network manager pre-connected to the network, controlling the newly- or further-connected network manager to directly acquire network setup information from the home appliance connected to the network;
c4) assigning network addresses to individual home appliances; and
c5) updating/storing network setup information associated with the network on the basis of the assigned network address in the DBs .

14. The method according to claim 10, wherein the step c) further includes the steps of:
c6) controlling the newly- or further-connected master unit to directly acquire network setup information from home appliances connected to the network; and
c7) configuring a database (DB) on the basis of the acquired network setup information.
